# EUROPEAN PATENT SPECIFICATION

(11) **EP 3 359 362 B1**
(45) Date of publication and mention of the grant of the patent: **04.09.2019**
(21) Application number: 16815650.3
(22) Date of filing: 23.11.2016
(51) Int. Cl.: B29B 7/20, B29B 7/26, B29B 7/74, B29C 48/07, B29C 48/355, B29C 48/375, B29C 48/40, B29C 48/88

(54) **PROCESS FOR PRODUCING AN ELASTOMERIC COMPOUND**
VERFAHREN ZUR HERSTELLUNG EINER ELASTOMERVERBINDUNG
PROCÉDÉ DE PRODUCTION D'UN COMPOSÉ ÉLASTOMÈRE

(30) Priority: 04.12.2015 IT UB20156260
(43) Date of publication of application: 15.08.2018
(73) Proprietor: Pirelli Tyre S.p.A., 20126 Milano (IT)
(72) Inventor: PESSINA, Roberto, 20037 Paderno Dugnano (IT)
(74) Representative: Tirloni, Bartolomeo
(86) International application number: PCT/IB2016/057068
(87) International publication number: WO 2017/093854

(56) References cited:
- EP-A1- 1 552 914
- EP-A2- 1 543 930
- WO-A1-2005/039847
- CN-U- 201 664 991
- US-A- 4 877 468
- US-A1- 2011 067 800
- US-A1- 2014 227 379
- US-B2- 6 881 049

## Description

The present invention relates to a process for producing an elastomeric compound reinforced with reinforcing fillers and to a relative process for producing tyres for vehicle wheels.

The production of elastomeric compounds for the production of tyres may include the use of a batch (or discontinuous) mixing device in which the reinforcing filler, typically carbon black and/or silica-based reinforcing fillers, is dispersed in the elastomeric polymer.

In the present description and in the following claims, the term "discontinuous or batch mixing device (or mixer)" means a mixing device adapted to be periodically fed with the elastomeric compound components in predefined amounts and mix them for a predetermined time so as to obtain a batch of elastomeric compound. At the end of mixing, the entire batch of elastomeric compound obtained is fully unloaded from the mixing device in a single solution.

Advantageously, the batch mixer is associated with a conveyor, dump or batch-off device adapted to receive at a large inlet mouth the entire batch unloaded from the batch mixer and convey it (typically by means of one or more helical screws housed in an inner chamber) through the length thereof from the inlet mouth to the outlet mouth, further imparting an elongated shape to the compound at the outlet mouth which lends itself to subsequent handling or storage better than the massive shape of the compound in output from the batch mixer. For example, the conveyor device may be provided at the inlet mouth thereof with a hopper arranged beneath the outlet mouth of the batch mixer, such hopper receiving the entire batch all at once by gravity. From the hopper, the batch is then progressively pulled by the screws within the inner chamber (and hence conveyed to the outlet) in relatively short times.

The batch mixing device differs from the "continuous mixing device", i.e. a mixing device adapted to receive in continuous feeding the basic ingredients (e.g. polymers, reinforcing fillers, plasticisers, resins, etc.) of the elastomeric compound, typically by means of controlled dosage dispensers, mix them in order to produce the elastomeric compound and unload the elastomeric compound in a continuous stream (except for possible stops of the mixing device due to maintenance, or elastomeric compound recipe change) in contrast to the periodic loading/unloading of the batch mixing device. In the jargon of the mixers for elastomeric compounds, the continuous mixing device is sometimes indicated by the term 'mixing extruder', which is herein considered as equivalent to 'continuous mixer'.

The continuous mixer (in particular its active elements, such as screws or mixer satellites) is then provided with mixing portions able to impart a high shear stress to the compound and, alternating with the mixing portions, transport portions able to impart a thrust to the compound being processed to feed it from one longitudinal end to the other of the inner chamber. It may further be provided with possible redistribution portions.

Examples of continuous mixing devices are continuous twin-screw or multi-screw (e.g. ring mixers), co-penetrating and counter-rotating, or planetary mixing devices.

Both the batch mixing device and the continuous mixing device are able to provide sufficient energy to the elastomeric compound to mix and disperse the reinforcing filler in the elastomeric polymer also in case of cold-feeding of the ingredients, and chew the elastomeric material thereby raising the temperature thereof in order to make it workable and plastic to facilitate the incorporation and/or distribution of the ingredients within the polymeric matrix, unlike other elastomeric compound handling devices, such as the conveying or unloading devices described above.

US2015031795 describes a method of production in three steps using an inner mixer of an elastomeric compound usable in treads of tyres for vehicle wheels comprising an elastomeric diene and carbon black.

WO2005/039847A1 describes a machine and a relative method for mixing and extruding rubber- or silicone-based plastic materials, comprising an unloading extruder with a pair of converging conical screws arranged in a buffer chamber, in which the outlet of the unloading extruder is temporarily obstructed by a removable closed flange, the buffer chamber also serving as compound preparation chamber.

The production of some elastomeric compounds involves a series of distinct mixing steps in succession, alternated to the unloading-loading operations of the batch mixing device and any other compound handling operations.

For example, for the production of elastomeric compounds with a high percentage of reinforcing filler, such as tread compounds for heavy transport vehicles, the high percentage of reinforcing filler (e.g. carbon black) leads to a tendency to high viscosity of the material being mixed. In order to lower the viscosity to values compatible with the subsequent processing steps (such as the shaping in a semi-finished product, e.g. a tread band, for incorporation in the green tyre), an appropriate number of mixing steps in succession in the batch mixing device is commonly used, such as up to five different mixing steps (including mixing to incorporate the ingredients able to promote the cross-linking), some of which are pure mixing steps (in jargon called 'remill'), i.e. without the addition of ingredients in the batch mixer. The Applicant has noted that such a number of distinct steps requires a heavy use of the batch mixer, both in terms of employment time and in terms of wear of the same, as well as the execution of all the operations required for the unloading and loading thereof between two successive mixing steps. All of this results in an extension of the production time of the elastomeric compound, particularly of the employment time of the batch mixer, and/or a high consumption of energy required and/or a high use of labour and/or increased wear of the batch mixer.

The Applicant has also noted that in the production of a series of batches of elastomeric compound, each batch passing through a plurality of mixing steps using a pair of devices formed by a batch mixer and an unloading device, it is advantageous to proceed by processing steps rather than in batches, i.e. subjecting in succession all batches in the series to the same processing step and once the relevant processing step has ended for all batches, subjecting in succession all batches in the series to the next processing step.

In this situation, and likewise in the case of the production - in succession at the same pair of devices - of a series of batches of elastomeric compound requiring a single mixing step each, the Applicant noted that a downtime is repeatedly generated in which the unloading device is stationary, since when it has completed the 'unloading' of a batch up to when it receives the next batch that the batch mixer has finished processing. In fact, typically, the process in the batch mixer lasts for a longer time interval (such as from about 3 min to 5 min) than the time it takes for the unloading device to carry the batch away (such as about 2 min). Therefore, the Applicant has realised that the batch mixer-unloading device pair is used in a non-optimal manner.

The Applicant, in the context of an industrial process for the production of tyres, has set itself the problem of developing a process for producing an elastomeric compound reinforced with reinforcing fillers, in particular with a high content of reinforcing fillers, that allows limiting the number of distinct mixing steps in the batch mixer without significantly increasing the mixing time in each single step, and/or which allows increasing the productivity of the pair of machines consisting of the batch mixer and of a respective unloading device interlocked to it, while ensuring the desired chemical-physical features of the elastomeric compound produced, before and after vulcanisation, and the desired performance of the tyre produced using such compound, all while maintaining the overall cost of the production process of the elastomeric compound contained, including the costs of purchase, maintenance and operation of the machines and sites used.

The Applicant has found that the above problem is solved by a process for producing an elastomeric compound according to the present invention, wherein at least one mixing step in a batch mixer is followed by a respective mixing step carried out in a twin-screw conical mixer with closed outlet mouth. In a first aspect thereof, the invention relates to a process for producing an elastomeric compound comprising 100 phr of at least one elastomeric polymer and at least 10 phr of at least one reinforcing filler, the process comprising:
- providing one or more batch mixers, each batch mixer comprising a mixing chamber, a pair of rotors housed in the mixing chamber and a piston arranged above the rotors and movable to and from the pair of rotors;
- providing one or more twin-screw conical mixers, each twin-screw conical mixer having a mixing chamber provided with an inlet mouth and an outlet mouth, wherein the mixing chamber houses two conical screws, counter-rotating and converging towards the outlet mouth, said each twin-screw conical mixer being provided with a door adapted to assume a closed configuration of said outlet mouth and an open configuration of said outlet mouth;

- at least one step of feeding a respective of said one or more batch mixers with at least one part of said at least one elastomeric polymer and at least one part of said reinforcing filler;
- a number n of steps of mixing, in a respective of said one or more batch mixers and for a respective first predetermined time interval, in a manner so as to obtain a respective batch of elastomeric compound, each step of mixing in the respective batch mixer being followed by a respective step of completely unloading said respective batch of elastomeric compound from said respective batch mixer and, subsequently, by a respective step of feeding a respective of said one or more twin-screw conical mixers with said respective batch of unloaded elastomeric compound, wherein a first step of said number n of mixing steps immediately follows said at least one step of feeding said respective batch mixer;
- a number m of steps of mixing said respective batch of elastomeric compound in a respective of said one or more twin-screw conical mixers with said door in said closed configuration of said outlet mouth for a respective second predetermined time interval, each step of mixing in the respective twin-screw conical mixer being (preferably immediately) subsequent to a respective step of said number n of steps of feeding the respective twin-screw conical mixer and being followed by a respective step of unloading said respective batch of elastomeric compound from said outlet mouth of the respective twin-screw conical mixer with said door arranged in said open configuration,
wherein said numbers n and m are integers greater than or equal to one, and wherein n is greater than or equal to m.

The term 'respective batch of elastomeric compound' indicates the batch of elastomeric compound at any instant of any of the processing steps, the physical-chemical features thereof being able to vary between one step and the other and even within the same step.

The term 'first step' if n is equal to one indicates the only step.

The Applicant has in fact realised that said process, which includes at least one mixing step in a batch mixer followed by a respective mixing step in a twin-screw conical mixer with closed door allows optimising the use of the pair of devices consisting of the batch mixer and the twin-screw conical mixer by increasing the overall output thereof, compared to the conventional processes, without impairing the physical-chemical properties of the resulting compound and without substantially increasing the costs of purchase, operation and maintenance of the machinery.

In fact, the above solution allows reducing the use of the batch mixer since part of the mixing process is transferred to the twin-screw conical mixer. In this way, compared to the traditional process, it is possible to reduce the processing times for each batch in the pair of devices, for example substantially reducing the mixing time of each batch in the batch mixer, thus making it available for a new batch of compound while the twin-screw conical mixer carried out its respective mixing step.

In addition, or alternatively, with the above solution it is possible, for each batch of elastomeric compound, to even be able to reduce the number of processing steps in the pair of devices. For example, compared to a traditional process which involves as many as four mixing steps in the batch mixer (excluding the further mixing step to incorporate the ingredients able to promote the cross-linking, as better explained hereinafter) followed by the respective unloading and batch-off step by means of an unloading device, with the present invention the Applicant has found that only three mixing steps are sufficient in the batch mixer (always excluding mixing to incorporate the ingredients able to promote the cross linking) followed by the respective mixing step in the twin-screw conical mixer. Considering also the time and resources required for unloading-loading the devices and all the operations typically interposed between two successive steps (sheet forming, cooling, storage, etc.), the overall saving in economic terms is evident.

Moreover, the Applicant notes that a further advantage of the present invention is that the twin-screw conical mixer, in addition to performing the above mixing step with the door closed, also performs the function of moving away from the batch mixer the compound batch unloaded from the latter and of shaping the compound, functions which typically are carried out by a specially dedicated unloading device.

An example of unloading device is the so-called 'twin-screw conical extruder' having a pair of screws converging towards the outlet mouth, totally similar to the above twin-screw conical mixer but without closing door. However, such a device (and, equivalently, the above twin-screw conical mixer with the door open) does not exercise a sufficiently intense mixing to obtain the effects of the present invention. The Applicant notes that the twin-screw conical mixer has a mixing chamber with 'conical' shape, wherein the inlet portion of the mixing chamber, opposite to the outlet mouth, is much larger than the portion close to the outlet mouth. Therefore, the inlet mouth, typically horizontal and located at the inlet portion and in the vicinity of the screws, is sufficiently large to allow accepting a whole batch (typically around 200-400 kg) unloaded from the batch mixer in a short time and transferring it to the mixing chamber with a temperature similar to that at which it exits from the batch mixer. This solves the problem of compatibility between the output of the batch mixer and the input of the twin-screw conical mixer, without having for example to shred the elastomeric compound for quickly feeding the twin-screw conical mixer in a controlled manner. Moreover, the compound is prevented from cooling cool before the whole batch is completely fed to the twin-screw conical mixer, which would produce extra work and/or energy consumption and/or time to restore the temperature of the compound in the twin-screw conical mixer.

Moreover, the twin-screw conical mixer has a mixing chamber sufficiently large to accommodate and work the whole compound batch exiting from the batch mixer, for the typical dimensions of the latter in an industrial context.

Moreover, the twin-screw conical mixer imparts an elongated shape to the unloaded elastomeric compound (once the door has been opened) which is suitable for subsequent handling.

Therefore, the Applicant knows that the twin-screw conical mixer of the present invention can fully replace the unloading device conventionally used, carrying out the above functions of carry the material away from the batch mixer and of imparting a shape suitable for subsequent handling and/or storage.

In other words, the present invention does not involve an increase in the number of devices necessary for the production of the elastomeric compound compared to conventional methods, nor a substantial increase of their complexity and/or their overall dimensions and/or their purchase/operation/maintenance cost, while achieving the above increase in their overall hourly productivity.

In fact, as said above, the present invention typically involves an increased use of the twin-screw conical mixer with respect to the conventional use of an unloading device, thereby occupying the above dead time of non-usage of the unloading device (replaced in the present invention by the twin-screw conical mixer).

In conclusion, the pair formed by the batch mixer and the twin-screw conical mixer (which also serves as an unloading device) is used in an optimal manner, with shortening of the dead times of the single machines and increase in the overall hourly productivity.

The Applicant has also identified a further advantage of the present invention in that compared to other mixers, the twin-screw conical mixer is simple, cost-effective, space-saving and involves a modest energy consumption.

The present invention may include one or more of the following preferred features.

Typically, the compound processing in the respective batch mixer, at least during the first step, includes one or more of the following sub-steps.

During the feeding, the piston is raised and the rotors are in rotation. Subsequently, the piston is lowered and the rotors 'chew' the ingredients to incorporate the filler in the elastomer, possibly with a break in which the piston is raised and lowered again to clean any residues. Once the incorporation has been carried out, the piston is raised for the possible feeding of a residual fraction of filler and/or plasticiser oils. Some material processing cycles follow (typically 2 or 3) in which the filler is dispersed (i.e. the dimensions of the agglomerates are reduced and homogenised as much as possible) and distributed (i.e. the agglomerates are spatially distributed as evenly as possible) in the elastomer. At the end of this process, the compound is unloaded.

In order to monitor and control the mixing process, as is known in the art, some parameters are measured over time, such as typically the temperature of the compound, the power absorbed by the rotor motors, the piston stroke, the rotation speed of the rotors, and they are compared, typically in real time, with predetermined respective process curves.

The abbreviation "phr" means the parts by weight per hundred parts by total weight of elastomeric polymer.

The total content of the elastomeric polymer (100 phr) in said elastomeric compound can be achieved by incorporating different elastomeric polymers.

Preferably, said at least one elastomeric polymer is selected from: diene elastomeric polymers and mono-olefin elastomeric polymers, or mixtures thereof.

An elastomeric diene can be selected, for example, from elastomeric polymers or copolymers with an unsaturated chain having a glass transition temperature (Tg) generally lower than 20 °C, preferably in the range from about 0 °C to about -110 °C. These polymers or copolymers may be of natural origin or may be obtained by solution polymerisation, emulsion polymerisation or gas-phase polymerisation of one or more conjugated diolefins, optionally blended with at least one co-monomer selected from monovinylarenes and/or polar co-monomers. Preferably, the resulting polymers or copolymers contain said at least one co-monomer selected from mono-vinylarenes and/or co-polar monomers in an amount of not more than 60% by weight. Examples of diene elastomeric polymers are: cis-1,4-polyisoprene (natural or synthetic rubber, preferably natural rubber), 3,4-polyisoprene, poly-1,3-butadiene (in particular, highly vinyl poly-1,3-butadiene having a content of 1,2-polymerized units of from about 15% to about 85% by weight), polychloroprene, optionally halogenated isoprene/isobutene copolymers, 1,3-butadiene/acrylonitrile copolymers, 1,3-butadiene/styrene copolymers, 1,3-butadiene/isoprene copolymers, isoprene/styrene copolymers, isoprene /1,3-butadiene/styrene terpolymers; or mixtures thereof.

Mono-olefin elastomeric polymers may be selected, for example, from: ethylene copolymers with at least one alpha-olefin having from 3 to 12 carbon atoms, and optionally with a diene having from 4 to 12 carbon atoms; poly-isobutene, copolymers of isobutene and at least one diene. The following are particularly preferred: ethylene/propylene (EPR) copolymers; ethylene/propylene/diene (EPDM) terpolymers; polyisobutene; butyl rubbers; halobutyl rubbers; or mixtures thereof.

Preferably, the total content of reinforcing filler in said elastomeric compound is equal to or greater than 20 phr, more preferably equal to or greater than 30 phr, even more preferably greater than or equal to 40 phr, and/or less than 120 phr, more preferably less than or equal to 100 phr.

Preferably, said at least one reinforcing filler is selected from: carbon black, silica-based reinforcing filler, alumina, calcium carbonate, kaolin or mixtures thereof.

Preferably, the total content of carbon black in said elastomeric compound is equal to or greater than 20 phr, more preferably equal to or greater than 30 phr, even more preferably greater than or equal to 40 phr, and/or less than 120 phr, more preferably less than or equal to 100 phr.

Advantageously, in this way the wear resistance of the compound is increased. As explained above, however, in that case the viscosity tends to increase.

Preferably, the elastomeric compound may incorporate one or more additional reinforcing fillers, for example selected from: silica-based reinforcing filler, carbon black, alumina, calcium carbonate, kaolin or mixtures thereof.

The expression "silica-based reinforcing filler" is meant to denote a reinforcing agent based on silicon dioxide (actual silica), silicates and mixtures thereof, typically having a surface area, measured according to the BET method, of between 80 and 220 m²/g, preferably between 160 and 180 m²/g.

The compounds reinforced with silica-based fillers are for example employed in the production of tread bands, since these compounds allow reducing the rolling resistance of the tyre.

Silica is chemically bonded to the polymer base as a result of reaction with a silica coupling agent typically formed by a silane agent which constitutes an ingredient of the elastomeric compound. In fact, a part of the silane reacts with the hydrophilic surface of silica and another part with the hydrophobic polymer base.

In this case, the mixing process includes a sub-step (which may take place for at least a substantial part in the batch mixer and/or in the twin-screw conical mixer) where the chemical reaction between silica-based filler and silane agent is obtained.

Preferentially, bis(3-triethoxysilyl-propyl)tetrasulphide is used as silane agent, such as commercially known by the initials Si 69 and marketed by Evonik.

Preferably, all the content in elastomeric polymer and/or reinforcing filler of the elastomeric compound is fed in said respective batch mixer, more preferably in said first mixing step. In this way, it is possible to efficiently disperse the reinforcing filler in the polymer.

Preferably, said number n is greater than or equal to two. More preferably, also said number m is greater than or equal to two.

Preferably, said number n is greater than or equal to three.

In this way, advantageously, compounds may be produced with more complex manufacturing processes, for example to incorporate the ingredients in several successive steps and/or to carry out further pure mixing steps ('remill').

Preferably, immediately prior to one step (preferably two) of said n mixing steps, subsequent to said first mixing step, it is contemplated to feed a respective one of said one or more batch mixers with antioxidants and/or anti-ozonants

Preferably, said antioxidants and/or anti-ozonants may be selected from phenylenediamine and derivatives thereof, diphenylamine and derivatives thereof, dihydroquinoline and derivatives thereof, phenol and derivatives thereof, benzimidazole and derivatives thereof, and hydroquinone and derivatives thereof.

Among the phenylenediamine derivatives, N-(1,3-dimethylbutyl)-N'-phenyl-p-phenylenediamine (6PPD) and N,N'-ditolyl-p-phenylenediamine (DTPD) are particularly preferred.

Among the diphenylamine derivatives, octylated diphenylamine (ODPA) and/or styrenated diphenylamine (SDPA) may for example be selected.

Among the dihydroquinoline derivatives, the polymerized 2,2,4-trimethyl-1,2-dihydroquinoline (TMQ) is particularly preferred.

Among the phenol derivatives, 2,6-di-t-butyl-hydroxytoluene (BHT) is particularly preferred.

Among the benzimidazole derivatives, 2-mercaptobenzimidazole (MBI), zinc-2-mercaptobenzimidazole (ZMBI), methyl-2-mercaptobenzimidazole (MMBI), and zinc-2-metilmercaptobenzimidazole (ZMMBI) are particularly preferred.

Among the hydroquinone derivatives, 2,5-di-t-butyl hydroquinone (TBHQ), 2,5-di(tert-amyl) hydroquinone (TAHQ), hydroquinone (HQ), and toluhydroquinone (THQ) may for example be selected. In this way, advantageously, any ingredients having low softening point (such as those listed above) are introduced in the in a step subsequent to the first step, in which the dispersion of reinforcing filler in the polymeric matrix is carried out. If such ingredients were already introduced in the first step, they would reduce the shear force on the compound and thus the dispersion of the filler in the polymer.

Preferably, at least one of said n mixing steps after said first mixing step, more preferably a third step of said n steps after a second step of said n steps, in turn after said first mixing step, is substantially a remixing step.

By mixing step it is meant a step in which no ingredient of the elastomeric compound is introduced in said respective batch mixer. Thus, advantageously, the compound is subjected to a processing step in jargon called of 'remill' which imparts optimal properties of dispersion and distribution of the ingredients in the polymeric base and the desired physical-chemical properties of the resulting elastomeric compound both before and after vulcanisation.

Preferably, in at least one of said n mixing steps subsequent to said first mixing step, more preferably in a last step of said n mixing steps, it is contemplated to feed said respective batch mixer with ingredients able to promote the cross-linking. In this way, advantageously, a vulcanisable elastomeric compound is obtained.

Preferably, the total content of ingredients capable of facilitating the cross-linking is greater than 1 phr, more preferably greater than 2 phr, and/or less than or equal to 10 phr, more preferably less than or equal to about 7 phr.

Preferably, said ingredients capable of facilitating the cross-linking comprise vulcanising agents for example selected from sulphur or sulphur-containing molecules (sulphur donors), or mixtures thereof. Preferably, said ingredients capable of facilitating the cross-linking comprise accelerating agents selected, for example, from the group: dithiocarbamates, guanidine, thiourea, thiazoles, sulphenamides, thiurams, amines, xanthates, or mixtures thereof.

Preferably, all the content in said ingredients capable of facilitating the cross-linking is fed in said final step. In this way, 'scorching' phenomena are prevented.

Preferably, also said number m is greater than or equal to three. That is, the process involves three distinct mixing steps in a batch mixer each followed by a respective mixing step in a twin-screw conical mixer. In this way, the Applicant has noted that, for example, for compounds with a high content of reinforcing fillers, i.e. greater than or equal to 40 phr, it is possible to obtain the dispersion of the ingredients and the desired chemical-physical features with just three steps in the batch mixer compared to the four steps conventionally used.

Preferably, n is greater than or equal to four, more preferably equal to four. In this way, both the above three steps in the batch mixer followed by the three respective steps in the twin-screw conical, and the final mixing step to incorporate the ingredients able to promote the cross-linking, are included. Preferably, m is equal to three. The Applicant has in fact empirically observed that the final mixing step for incorporating the ingredients able to promote the cross-linking does not require a respective mixing step in the twin-screw conical mixer with the door closed, thereby simplifying the process of obtaining a vulcanisable compound.

Preferably, said final step of said n mixing steps is (preferably immediately) followed by a respective step of unloading said respective batch of elastomeric compound from said outlet mouth of the respective twin-screw conical mixer with said door arranged in said open configuration. Thus, advantageously, the same device is used, i.e. the twin-screw conical mixer, also to move away and shape the elastomeric compound, as explained above.

Preferably, in addition to said at least one elastomeric polymer, said reinforcing filler and said ingredients capable of facilitating the cross-linking, at least one of the following ingredients may be present in the elastomeric compound:
- activators, such as zinc compounds, and in particular ZnO, ZnCO3, zinc salts of saturated or unsaturated fatty acids containing from 8 to 18 carbon atoms, such as, for example, zinc stearate, which are preferably formed in situ in the elastomeric compound from ZnO and fatty acid, as well as BiO, PbO, Pb₃O₄, PbO₂, or mixtures thereof.
- additives selected on the basis of the specific application for which the compound is designed such as, for example, antioxidants, anti-ageing agents, plasticisers (such as plasticising oils), tackifiers, anti-ozone agents, reinforcing resins, or mixtures thereof.

In one embodiment, said respective twin-screw conical mixer is not fed with any ingredient of the elastomeric compound, except for the respective batch of elastomeric compound unloaded from the respective batch mixer. Thus, advantageously, the dispensing and feeding of the ingredients is simplified, having the Applicant observed that the twin-screw conical mixer can advantageously operate as 'remill' mixer, imparting the desired physical-chemical features to the resulting compound. Preferably, it is provided to provide only one batch mixer for all said n mixing steps and/or only one twin-screw conical mixer for all said m mixing steps. In this way, advantageously, it is possible to produce a batch of elastomeric compound, or more preferably a series of compound batches as described above, through a plurality of successive steps in the same pair of devices. However, the present invention also contemplates the case in which the various mixing steps are carried out in physically different batch mixers and/or batch mixers twin-screw conical mixers.

Each or said one twin-screw conical mixer may exhibit one or more of the following preferred features. Preferably, said screws of the twin-screw conical mixer are helical screws with variable pitch, typically with a pitch that decreases monotonically going towards the outlet mouth.

Preferably, said screws are co-penetrating.

Preferably, said screws of the twin-screw conical mixer rotate at the same speed.

Preferably, said respective second predetermined mixing time interval in said twin-screw conical mixer with door closed is greater than or equal to 60 seconds, more preferably greater than or equal to 90 seconds, and/or less than or equal to 250 s, more preferably lower than or equal to 180 s. In this way, a sufficient processing of the compound is obtained and also the process time of the twin-screw conical mixer remains comparable with the typical process time of the batch mixer, in order to maximise the hourly output of the pair of machines.

Preferably, said mixing in said twin-screw conical mixer takes place by alternating at least one sub-step (more preferably at least two sub-steps) of mixing with normal rotation of the screws with at least one sub-step (more preferably two sub-steps) of mixing with reversed rotation of the screws. By normal rotation it is meant the rotation with which the screws advance the material towards the outlet mouth. By reversed rotation it is meant a rotation in the opposite direction to that of normal rotation.

Preferably, said sub-step (or each of said sub-steps) of mixing with normal rotation lasts a time interval greater than or equal to 20 s, and/or less than or equal to 60 s.

Preferably, said sub-step (or each of said sub-steps) of mixing with reversed rotation lasts a time interval greater than or equal to 5 s, and/or less than or equal to 30 s.

The Applicant has realised that advantageously, the alternation of mixing with normal and reversed rotation improves the mixing and the uniformity of the material.

Preferably, said screws rotate at a speed less than or equal to 130 rpm (revolutions per minute), more preferably less than or equal to 100 rpm, and/or greater than or equal to 20 rpm.

Preferably, during mixing in said twin-screw conical mixer, a temperature in the inner mixing chamber is maintained greater than or equal to 120 °C, and/or less than or equal to 150 °C, more preferably less than or equal to 140 °C. Advantageously in this way, the phenomenon of scorching of the compound, i.e. undesired cross-linking of the elastomer, is prevented.

Preferably, during the mixing in said twin-screw conical mixer, a temperature in the inner mixing chamber is controlled by varying a rotation speed of the screws.

Preferably, said screws have a maximum diameter (at the inlet portion) smaller than or equal to 1000 mm, more preferably smaller than or equal to 900 mm, and/or greater than or equal to 500 mm, more preferably greater than or equal to 600 mm.

Preferably, said screws have a minimum diameter (at the outlet mouth) smaller than or equal to 500 mm, more preferably smaller than or equal to 400 mm, and/or greater than or equal to 100 mm, more preferably greater than or equal to 200 mm.

Preferably, said screws have a length smaller than or equal to 2000 mm, more preferably smaller than or equal to 1500 mm, and/or greater than or equal to 500 mm, more preferably greater than or equal to 700 mm.

Preferably said screws together form (in the proximity of the outlet mouth) an acute angle (with reference to the rotation axes of the screws) less than or equal to 30°, more preferably less than or equal to 20°, and/or greater than or equal to 10°, more preferably greater than or equal to 12°. Preferably, each of said screws is driven by a motor having power of less than or equal to 300 kW, more preferably less than or equal to 200 kW and/or greater than or equal to 80 kW, more preferably greater than or equal to 100 kW. In this way, the mixing is at the same time effective and low energy consumption.

Preferably, said twin-screw conical mixer comprises a loading hopper having a lower end at the inlet mouth and an upper end at an unloading mouth of said respective batch mixer.

Preferably, said loading hopper is configured to connect without interruption the mixing chamber of the respective batch mixer with the mixing chamber of the twin-screw conical mixer. Advantageously in this way, the compound is not in contact with the external environment.

Preferably, the twin-screw conical mixer comprises a suction pump in fluid connection with said inner chamber of the twin-screw conical mixer, more preferably having a suction mouth at the loading hopper. Advantageously in this way, the mixing by-products, typically in the form of vapour, such as water and/or optionally ethanol, can be suctioned.

Preferably, said inlet mouth has a section which develops in the vicinity of the screws, more preferably parallel to the screws.

Preferably, said inlet mouth of the twin-screw conical mixer has a section having an area greater than or equal to 2000 cm², more preferably greater than or equal to 3000 cm². Advantageously, in this way it is possible to load all the batch of compound into the inner chamber of the twin-screw mixer in a short time.

Preferably, said inner chamber of the twin-screw conical mixer has a useful volume for mixing the compound (i.e. the free volume available for processing the compound) greater than or equal to 100 litres, more preferably greater than or equal to 150 litres. In this way, advantageously, the twin-screw conical mixer can simultaneously process the entire batch of compound.

Preferably, said batch of compound has a total weight greater than or equal to 100 kg and/or less than or equal to 500 kg.

Preferably, the mixing in said respective batch mixer is carried out at a rotor speed, typically inconstant, greater than or equal to 10 revolutions per minute and/or less than or equal to 80 revolutions per minute, more preferably between 20 and 60 revolutions per minute.

Preferably, said respective first mixing time interval in said respective batch mixer is greater than 100 s, more preferably greater than or equal to 150 s, and/or less than or equal 500 s, more preferably less than or equal to 400 s.

Preferably, said rotors are counter-rotating.

Said rotors may be of tangential or co-penetrating type.

Particular examples of batch mixers that can advantageously be used according to the present invention are those known under the trademark Banbury® or Intermix®, depending on whether the rotors work mutually tangentially or are co-penetrating, respectively.

Preferably, feeding said respective twin-screw conical mixer with said respective batch of elastomeric compound takes place immediately after the unloading of the respective batch of elastomeric compound from the respective batch mixer. Preferably, the temperature of the elastomeric compound fed to said respective twin-screw conical mixer is substantially equal to the temperature of the elastomeric compound unloaded from the batch mixer, more preferably greater than or equal to 60 °C, even more preferably greater than or equal to 80 °C. In this way, the energy necessary to bring the compound to temperature for the processing in the twin-screw conical mixer is saved.

Preferably, it is further contemplated to shape said respective elastomeric compound unloaded from said respective twin-screw conical mixer in a sheet through the use of a sheeting device arranged downstream to the respective twin-screw conical mixer. Said sheeting device may for example be a calender or an open mixer with counter-rotating rollers. In this way, advantageously, the compound acquires a suitable shape for subsequent handling and/or storage.

Preferably, it is contemplated to cool said sheet-shaped elastomeric compound in a festoon system arranged downstream of said sheeting device. The festoon system advantageously moves the compound away from the twin-screw conical mixer.

Preferably, said cooled elastomeric compound is arranged pitched on a pallet and stored.

According to a further aspect thereof, the present invention relates to a process for producing tyres, preferably for heavy transport vehicles, comprising:
- building a green tyre,
- subjecting the green tyre to moulding and vulcanisation in order to obtain a finished tyre;
wherein at least one component of said green tyre comprises said elastomeric compound.

Said component may be one of the various structural elements of a tyre such as, for example, tread band, under-layer, carcass layer, belt layer, sidewall, reinforced element, anti-abrasive layer. Preferably, said component is a tread band.

According to a typical process, the structural elements can be assembled subsequently using a suitable building apparatus to obtain a finished tyre.

On the other hand, alternative processes for building a tyre without using semi-finished products are known in the art.

In this regard, in the case of structural elements of tyres which substantially consist of an elastomeric compound such as, for example, the tread band, continuous elongated tape element is laid on a support bearing the tyre to be built, said continuous elongated tape element being arranged so as to form a plurality of consecutive coils in side by side and/or superposed relationship, to obtain a tyre in its final configuration. Alternatively, in the case of structural elements of a tyre which substantially consist of an elastomeric compound and at least one of the reinforcing cord elements such as, for example, a carcass ply, a belt layer, said continuous elongated tape element is associated with at least one reinforcing cord element to produce semi-finished products in the form of a rubber-covered cord or of a strip element comprising at least one reinforcing cord element, which are further laid on a support bearing the tyre to be built, in side by side and/or superposed relationship, in order to obtain a tyre in its final configuration. The present invention will be illustrated in further detail by means of exemplary embodiments with reference to the accompanying figures, in which:
- figure 1 shows an exemplary plant for producing an elastomeric compound according to the present invention;
- figure 2 shows a schematic and partial section of a twin-screw conical mixer used in the present invention.

Reference numeral 1 denotes an example of an industrial plant adapted to the execution of the process for producing an elastomeric compound with reinforcing filler according to the present invention.

The plant comprises (at least) one batch mixer 101 comprising a mixing chamber, a pair of counter-rotating rotors housed in the mixing chamber and a piston (not shown) arranged above the rotors and movable to and from the pair of rotors. The batch mixing device is usually provided with a pneumatic or hydraulic cylinder arranged in the upper part of the mixing chamber for moving the piston upwards, to make the mixing chamber accessible, thus allowing the introduction of the ingredients through special loading hoppers (not shown), and downwards, so as to exert a pressure on the material processed by the rotors and located above them. A hydraulic system arranged on the bottom of the mixing chamber moves a door which opens a suitable unloading mouth 110 for allowing the unloading of the elastomeric compound at the end of the mixing cycle.

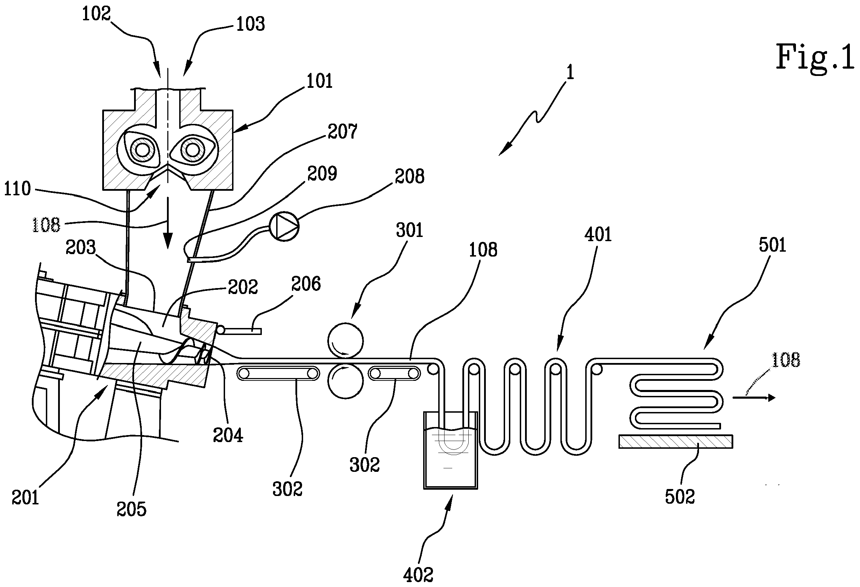

Figure 1 schematically shows a batch mixer with tangential rotors.

Typically in the industrial field, the inner volume of the mixing chamber is adapted to produce compound batches weighing a few hundred kg each (200-400 kg).

Plant 1 further comprises (at least) one twin-screw conical mixer 201 arranged underneath the batch mixer.

The twin-screw conical mixer has a mixing chamber 202 provided with an inlet mouth 203 and an outlet mouth 204.

Preferably, the inlet mouth 203 has a section that develops in the vicinity of the screws and has an area greater than or equal to 2000 cm².

Typically, the mixing chamber 202 consists of a first portion 202a proximal to the outlet mouth 204 and closed on the lateral development thereof and a second portion 202b, larger than and opposite to, the first portion and arranged at the inlet mouth 203 (and therefore, the second portion is laterally open at the inlet mouth).

The mixing chamber houses two conical counter-rotating screws 205 converging towards the outlet mouth. The acute angle 210 formed by the two axes of rotation of the screws is by way of example equal to 16°.

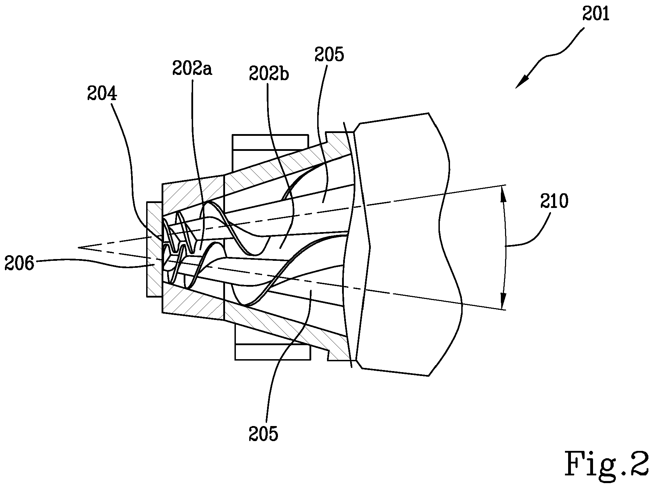

The twin-screw conical mixer is further provided with a door 206 adapted to fully open and close said outlet mouth 204. In figure 2, the door is schematically shown in the closed configuration of the outlet mouth, while in figure 1 it is shown in the open configuration of the outlet mouth 204.

Preferably, the screws of the twin-screw conical mixer are co-penetrating helical screws with pitch that decreases strictly monotonically going towards the outlet mouth 204. Typically, the screws are devoid of mixing sections, i.e. adapted to impart shear strains to the material being processed.

Preferably, each of said screws is driven by a dedicated motor (not shown) and the mixer may comprise a synchronisation device (not shown) between the two screws which ensures the synchronous and counter-rotating rotation thereof.

Preferably, the twin-screw conical mixer comprises a loading hopper 207 having a lower end at the inlet mouth 203 and an upper end at the unloading mouth 110 of the batch mixer 101.

Preferably, the upper end of the loading hopper surrounds the unloading mouth 110 in tight contact with the batch mixer so as to establish a continuity between the batch mixer and the twin-screw conical mixer.

Preferably, the twin-screw conical mixer includes a suction pump 208 having a suction mouth 209 at the lateral walls of the loading hopper.

Plant 1 preferably comprises a sheeting device 301 (by way of example a calender, as shown in figure 1, or an open mixer with counter-rotating rollers or open mill, not shown) arranged downstream of the twin-screw conical mixer.

Plant 1 preferably comprises a festoon system 401 arranged downstream of the sheeting device adapted to convey the compound away from the mixer and cool it down (for example by means of air jets). Typically, the festoon system comprises a tank 402 to wet the elastomeric compound with an anti-tackifier liquid.

Suitable conveyor belts 302 are typically positioned between the twin-screw conical mixer and the sheeting device and/or between the latter and the festoon system.

Plant 1 preferably comprises a loading station 501 in which the cooled elastomeric compound is arranged pitched on a pallet 502 for temporary storage, awaiting for the compound to be subjected to subsequent processing cycles.

In use, plant 1 is adapted to carry out a process for producing an elastomeric compound 108 with reinforcing filler according to the present invention.

Said elastomeric compound 108 may be the masterbatch, i.e. an elastomeric compound that has the elastomeric base and the reinforcing filler already incorporated but in which at least the agents that promote the vulcanisation have not yet been incorporated in order to produce the final vulcanisable elastomeric compound adapted to the incorporation in the green tyre (for example in the form of a component of the tyre, such as typically the tread band). The vulcanising agents are typically incorporated in a further separate mixing step, as better explained hereinafter, in order to produce the final compound.

In order to produce the elastomeric compound 108 according to the present invention, it is contemplated to feed the elastomeric polymer 102 (for a total content equal by definition to 100 phr) and at least 10 phr of a reinforcing filler 103 in the batch mixer 101.

Then, a first processing step of the ingredients introduced in the batch mixer follows, which comprises several sub-steps including the incorporation of the reinforcing filler in the elastomeric polymer, the dispersion and distribution of the reinforcing filler in the polymeric base, the introduction of additional ingredients such as plasticising oils, etc.

Typically, during this process the piston performs several stroke cycles up and down, such as is known in the industry.

At the end of the above processing, the batch of elastomeric compound 108 thus obtained, in which the reinforcing filler is substantially evenly dispersed and distributed in the elastomeric polymer, is completely unloaded from the unloading mouth 110 of the batch mixer 101.

Advantageously, a substantial part of the mixing takes place in the twin-screw conical mixer 201.

To this end, the entire batch of compound 108 unloaded from the batch mixer is fed all at once to the twin-screw conical mixer. For example, the door that inferiorly closes the mixing chamber of the batch mixer 101 is opened so that the entire batch drops by gravity into hopper 207 up to reach the inlet mouth 203 of the twin-screw conical mixer.

Here, the compound 108 encounters screws 205, which have been previously set in rotation. The combination of the large section area of the inlet mouth 203, the large second portion 202b of the mixing chamber 202 and the large helical pitch and depth of screws 205 at the inlet mouth 203 allows a rapid introduction of the entire batch of compound 108 in the mixing chamber 202.

Preferably, no other ingredient of the elastomeric compound 108, in addition to compound 108, is introduced into the twin-screw conical mixer.

Upon feeding compound 108 into the twin-screw conical mixer, the door is typically already in the closed configuration of the outlet mouth 204 (fig. 2) and, as mentioned, screws 205 are already rotating.

With the door in this configuration, the compound is processed in the mixing chamber 202 of the twin-screw conical mixer. Once a suitable time interval has passed, door 206 is set to the open configuration of the outlet mouth (fig. 1) and the elastomeric compound 108 is unloaded from the outlet mouth 204 of the twin-screw conical mixer, which has been left free.

During the processing in the twin-screw conical mixer, typically the first portion 202a of the mixing chamber is completely filled by the compound, while the second portion 202b is only partially filled by the compound.

Due to the transport action carried out by screws 205 when rotating in the normal direction, and upon the locking action carried out by door 206, the compound is subjected to a recirculation of material in the longitudinal direction which promotes the mixing of the material, while not being subjected to shear strains as typically occurs in mixers such as the above batch mixers or continuous mixers.

Preferably, the mixing in the twin-screw conical mixer occurs by alternating at least one step of mixing with normal rotation of the screws with at least one step of mixing with reversed rotation of the screws. During the reversed rotation of the screws, the material being processed is carried away from door 206, to then be again pushed against door 206 during the normal rotation of the screws. This increases the mixing degree of the material.

Preferably, during the mixing in the twin-screw conical mixer, the temperature of the material being processed is maintained in a controlled range of values such as 130° -140 °C). To this end, the twin-screw reaction mixer is provided with a thermo-regulation system (typically liquid), not shown in the figures, which acts on the mixing chamber (for example a set of hydraulic conduits formed in the body of the mixer). Moreover, the rotation speed of the screws can be suitably varied as a function of the temperature detected, with a feedback cycle, in order to control the temperature of the material.

By way of example, the elastomeric compound 108 unloaded in a continuous flow from the twin-screw conical mixer is shaped as a sheet by calender 301 and hence transported to the festoon system 401 to be wetted with a non-adhesive liquid and cooled.

Typically, the cooled elastomeric compound 108 is arranged pitched on a pallet 502 and stored waiting for the subsequent processing steps.

Preferably, the elastomeric compound 108 thus obtained is subjected to at least one further step, preferably at least two further steps, in the pair of devices consisting of the batch mixer 101 and the twin-screw conical mixer 201, each further step taking place substantially as described above, with the difference that the ingredients introduced are different. For example, in a second step, antioxidants and/or anti-ozonants may be introduced into the batch mixer, while no further ingredient is fed in a third step. Advantageously, no ingredient is fed into the twin-screw conical mixer.

In order to obtain a vulcanisable elastomeric compound, adapted to the incorporation into the green tyre, a further final mixing step is typically carried out within the batch mixer 101.

In this case, the batch mixer is fed with the (cooled) elastomeric compound 108 and at least with the ingredients able to promote the cross-linking. The ingredients are then mixed in the batch mixer capable of facilitating the cross-linking with the elastomeric compound 108 (typically by checking that the temperature does not rise to values that might trigger an at least partial vulcanisation, or scorching) in order to obtain a respective batch of vulcanisable elastomeric compound which is finally entirely unloaded from said final mixer.

After the mixing stage, the respective batch of final elastomeric compound obtained is completely unloaded from the batch mixer 101 and then fed to the twin-screw conical mixer, which unloads (without substantially any further mixing) the respective batch of elastomeric compound from its outlet mouth 204 with door 206 arranged in the open configuration. Therefore, the twin-screw conical mixer 201 may in this case be used as an unloading device interlocked to the batch mixer 101, once door 206 is kept open.

Further handling and/or shaping steps of the respective elastomeric compound obtained follow, such as the passage in the sheeting device 301, the subsequent cooling into festoons, an extrusion into a semi-finished product, etc.

In one embodiment, the batch mixer used for some or all of the respective mixing steps is physically the same and/or the twin-screw conical mixer used for some or all of the respective mixing steps is physically the same. In other words, the elastomeric compound 108 is repeatedly returned to the same batch mixer 101 to be subjected to the above n mixing steps and to the above m mixing steps.

In an alternative embodiment, the batch mixer may be a different mixer for each or some of the n mixing steps, and likewise for the twin-screw conical mixer.

The present invention will be further described below by means of two test examples, the comparative example 1 and example 2 according to the present invention, which are given purely by way of example and without any limitation of the present invention.

Tables 1, 2 and 3 show the recipe of ingredients of a compound for the tread of a tyre, generally used in examples 1-2 (the amounts are given in phr).

**TABLE 1**

| INGREDIENT | phr |
|---|---|
| natural rubber, STR 20 - Thaiteck Rubber | 60 |
| high-cis 1,4-polybutadiene, BR40 Europrene Neocis - Polimeri Europa | 40 |
| Carbon black: (N234 Cabot) | 50 |
| Zinc oxide (green sealant) (Zincol Ossidi) | 4 |
| Stearic acid - STEARIN N (SOGIS) | 2 |
| microcrystalline wax composition (Antilux® 654 - Lanxess) | 1 |
| CTP: cyclohexylthiophthalimide (Vulkalent® G - Bayer) | 0.1 |

**TABLE 2**

| INGREDIENT | phr |
|---|---|
| 6PPD (2,2,4-trimethyl-1,2-dihydroquinoline - Vulcanox® 4020 - Bayer) | 2 |
| Antioxidant, para-phenylenediamine (Santoflex® 13 - Monsanto) | 2 |

**TABLE 3**

| INGREDIENT | phr |
|---|---|
| CBS accelerant N-cyclohexyl-2-benzothiazyl sulphenamide (Vulkacit® CZ - Bayer) | 1.5 |
| Soluble sulphur: (Eastman) | 1 |

### Example 1 (Comparative)

### First step

All components listed in Table 1 were mixed together in a Banbury® mixer (model F270) operating under the following working conditions:
- mixing time: 270 seconds;
- filling factor: 75%;
- rotor speed: variable between 25-40 rpm;
- unloading temperature: 135 °C.

### First unloading step

The elastomeric compound obtained from the first step was immediately unloaded in a single solution from the Banbury® to a twin-screw conical mixer Colmec® CTM315 with the following characteristics:
- Maximum screw diameter 800 mm
- Minimum screw diameter 300 mm
- Screw length 1000 mm
- Angle between screws 16°
- Power of each motor 160 KW
- sectional area of the inlet mouth about 5000 cm².

The overall time to unload the Banbury® is equal to 30 seconds.

With the above conical mixer, the material was immediately moved away by operating under the following working conditions:
- door in open configuration
- screw rotation speed: 80 rpm,
- normal rotation (n),
- total emptying time of the twin-screw conical mixer: 90 seconds.

The material exiting from the twin-screw conical mixer was then formed into sheets, cooled to room temperature (23°) and stored.

### Second step

The elastomeric compound obtained as described above, as well as all the ingredients in Table 2 were mixed together in a Banbury® mixer (model F270) operating under the following working conditions:
- mixing time: 210 seconds;
- filling factor: 70%;
- rotor speed: variable between 30-40 rpm;
- unloading temperature: 130 °C.

### Second unloading step

Like the first unloading step.

### Third step (first remill step)

The elastomeric compound thus obtained was fed, without the addition of further ingredients, to a Banbury® mixer (model F270), operating under the following working conditions:
- mixing time: 180 seconds;
- filling factor: 70%;
- rotor speed: variable between 30-40 rpm;
- unloading temperature: 130 °C.

### Third unloading step

Like the first unloading step.

### Fourth step (second remill step)

The elastomeric compound thus obtained was fed, without the addition of further ingredients, to a Banbury® mixer (model F270), operating under the following working conditions:
- mixing time: 180 seconds;
- filling factor: 70%;
- rotor speed: variable between 30-40 rpm;
- unloading temperature: 130 °C.

### Fourth unloading step

Like the first unloading step.

### Final step

The elastomeric compound thus obtained as well as all the ingredients in Table 3 were fed to a Banbury® mixer (model F270) and a final mixing step was carried out operating under the following working conditions:
- mixing time: 150 seconds;
- filling factor: 75%;
- rotor speed: 30 revolutions per minute;
- unloading temperature: 100 °C.

### Final unloading step

Like the first unloading step.

### Example 2 (invention)

### First step

All components listed in Table 1 were mixed together in a Banbury® mixer (model F270) operating under the following working conditions:
- mixing time: 270 seconds;
- filling factor: 75%;
- rotor speed: variable between 25-40 rpm;
- unloading temperature: 135 °C.

### First intermediate step

The batch of elastomeric compound obtained from the above first step was immediately unloaded from the Banbury® in a single solution into the hopper of said twin-screw conical mixer Colmec® CTM315.

As above, the overall time to unload the Banbury® is equal to 30 seconds.

Then, further mixing was immediately carried out in the twin-screw conical mixer, without the addition of any additional ingredient, by operating under the following working conditions:
- door in closed configuration
- screw rotation speed of from 40 to 80 rpm,
- normal (n) - reversed (i) rotation profile: n-i-n-i-n
- respective mixing time: 45-15-45-15-30 seconds
- total mixing time in the conical mixer: 150 seconds.
- total emptying time of the conical mixer: 60 seconds.
- temperature of the compound measured upon unloading: 130 °C.

The material exiting from the twin-screw conical mixer was then formed into sheets, cooled to room temperature (23°) and stored for the subsequent processing steps as follows.

### Second step

The elastomeric compound obtained as described above, as well as all the ingredients in Table 2 were mixed together in a Banbury® mixer (model F270) operating under the following working conditions:
- mixing time: 210 seconds;
- filling factor: 70%;
- rotor speed: variable between 30-40 rpm;
- unloading temperature: 130 °C.

### Second intermediate step

Like the first intermediate step.

### Third step

The elastomeric compound thus obtained was fed, without the addition of further ingredients, to a Banbury® mixer (model F270), operating under the following working conditions:
- mixing time: 180 seconds;
- filling factor: 70%;
- rotor speed: variable between 30-40 rpm;
- unloading temperature: 130 °C.

### Third intermediate step

Like the first intermediate step.

### Final step

The elastomeric compound thus obtained as well as all the ingredients in Table 3 were fed to a Banbury® mixer (model F270) and a final mixing step was carried out operating under the following working conditions:
- mixing time: 150 seconds;
- filling factor: 75%;
- rotor speed: 30 revolutions per minute;
- unloading temperature: 100 °C.

### Final unloading step

The elastomeric compound obtained from the final step was immediately unloaded in a single solution from the Banbury® into the hopper of the above twin-screw conical mixer Colmec®CTM315.

The overall time to unload the Banbury® is equal to 30 seconds.

With the above conical mixer, the material was immediately moved away by operating under the following working conditions:
- door in open configuration
- screw rotation speed: 80 rpm,
- normal rotation (n),
- total emptying time of the twin-screw conical mixer: 90 seconds.

The material exiting from the twin-screw conical mixer was then formed into sheets, cooled to room temperature (23°) and stored.

The elastomeric compounds obtained in Examples 1 and 2 were tested to evaluate the following properties: percentage of non-dispersed filler, Mooney viscosity (ML 1+4), elongation loads Ca1, Ca3, CR: the results obtained are shown in Table 4.

The percentage of non-dispersed filler was measured as follows on non-cross-linked samples extracted from the compound after the final unloading step.

For each compound, square samples were obtained from a compound vulcanised for 10 minutes at 170 °C, having side of 2.5 mm and a thickness comprised between 0.5 and 6 mm. A microtome Leica LN 20 with cryogenic units was used for the preparation of the samples.

Images of the surface of the samples obtained with a Leica DM 4000 microscope with analogue camera were subsequently captured.

On these samples, having a total area of 6.25 mm2 each, the AIA (Automated Image Analysis) technique was used with the support of the Image-Pro™ plus image analysis software of Media Cybernetics, Inc. In practice, this analysis technique calculates the percentage by volume of the reinforcing filler agglomerates having a volume greater than 7 mm³ with respect to the total volume of the reinforcing filler.

The values shown in the table are obtained from a calculation on ten images for a total area of 62.5 mm².

It is noted that the Applicant has empirically verified that values of non-dispersed fillers below 1% are considered acceptable for the purposes of the production of tyres.

The Mooney viscosity ML (1+4) at 100 °C was measured according to the ISO 289-1: 2005 standard on non-cross-linked samples extracted from the compound after the final step.

The elongation loads Ca1, Ca3, CR (measured at 100%, 300%, respectively, of elongation and break) were measured according to the ISO 37 standard on samples extracted from the compound after the final step and after cross-linking.

The data shown in table 4, with the exception of the percentages of non-dispersed filler, are expressed for Example 2 as a percentage of the corresponding data obtained for Example 1 (arbitrarily set at 100).

**TABLE 4**

| EXAMPLE | Mooney viscosity (ML 1+4) (%) | Percentage of non-dispersed filler (%) | Ca1 (%) | Ca3 (%) | CR (%) |
|---|---|---|---|---|---|
| Example 3 (Comparative) | 100 | 0.5 | 100 | 100 | 100 |
| Example 4 (invention) | 98.7 | 0.6 | 100.3 | 101.1 | 99.8 |

The data shown in table 4 show that the elastomeric compounds obtained according to the present invention (Example 2), with a reduction of an entire remill step of the compound in a batch mixer, which in addition to the rest involves a reduction of about 18% of the occupation time of the batch mixer (3 minutes less on a total of 16 minutes and a half), have a dispersion of the filler and a viscosity substantially equal to those of a compound completely processed in batch mixers. Moreover, also the loads at the various elongations after vulcanisation are substantially comparable.

## Claims

1. Process for producing an elastomeric compound (108) comprising 100 phr of at least one elastomeric polymer (102) and at least 10 phr of at least one reinforcing filler (103), the process comprising:
- providing one or more batch mixers (101), each batch mixer comprising a mixing chamber, a pair of rotors housed in the mixing chamber and a piston arranged above the rotors and movable to and from the pair of rotors;
- providing one or more twin-screw conical mixers (201), each twin-screw conical mixer having a mixing chamber (202) provided with an inlet mouth (203) and an outlet mouth (204), wherein the mixing chamber houses two conical screws (205), counter-rotating and converging towards the outlet mouth, said each twin-screw conical mixer being provided with a door (206) adapted to assume a closed configuration of said outlet mouth and an open configuration of said outlet mouth;
- at least one step of feeding a respective of said one or more batch mixers (101) with at least one part of said at least one elastomeric polymer (102) and at least one part of said reinforcing filler (103);
- a number n of steps of mixing, in a respective of said one or more batch mixers (101) and for a respective first predetermined time interval, in a manner so as to obtain a respective batch of elastomeric compound (108), each step of mixing in the respective batch mixer being followed by a respective step of completely unloading said respective batch of elastomeric compound from said respective batch mixer and, subsequently, by a respective step of feeding a respective of said one or more twin-screw conical mixers (201) with said respective batch of unloaded elastomeric compound, wherein a first step of said number n of mixing steps immediately follows said at least one step of feeding said respective batch mixer;
- a number m of steps of mixing said respective batch of elastomeric compound (108) in a respective of said one or more twin-screw conical mixers (201) with said door (206) in said closed configuration of said outlet mouth for a respective second predetermined time interval, each step of mixing in the respective twin-screw conical mixer being subsequent to a respective step of said number n of steps of feeding the respective twin-screw conical mixer and being followed by a respective step of unloading said respective batch of elastomeric compound from said outlet mouth of the respective twin-screw conical mixer with said door arranged in said open configuration,
wherein said numbers n and m are integers greater than or equal to one, and wherein n is greater than or equal to m.

2. Process as claimed in claim 1, wherein each step of feeding said respective twin-screw conical mixer (201) with said respective batch of elastomeric compound occurs immediately after the respective unloading of the respective batch of compound from the respective batch mixer (101), wherein the temperature of the elastomeric compound fed to said respective twin-screw conical mixer (201) is substantially equal to the temperature of the elastomeric compound unloaded from the batch mixer (101), and wherein each step of mixing in the respective twin-screw conical mixer (201) immediately follows said respective step of said number n of steps of feeding the respective twin-screw conical mixer (201).

3. Process as claimed in claim 1 or 2, wherein said at least one elastomeric polymer is selected from among: diene elastomeric polymers and mono-olefin elastomeric polymers, or mixtures thereof, wherein said at least one reinforcing filler is selected from among: carbon black, silica-based reinforcing filler, alumina, calcium carbonate, kaolin or mixtures thereof and wherein the overall content of reinforcing filler in said elastomeric compound is equal to or greater than 20 phr and/or less than 120 phr, and wherein the overall content of carbon black in said elastomeric compound is equal to or greater than 40 phr.

4. Process as claimed in any one of the preceding claims, wherein the entire content of elastomeric polymer and/or of reinforcing filler of the elastomeric compound is fed into said respective batch mixer (101).

5. Process as claimed in any one of the preceding claims, wherein said number n is greater than or equal to two.

6. Process as claimed in claim 5, wherein said number m is greater than or equal to two and wherein said number n is greater than or equal to three.

7. Process as claimed in any one of the claims from 5 to 6, wherein at least one of said n mixing steps after said first mixing step, preferably a third step of said n mixing steps after a second step of said n steps, in turn after said first mixing step, is substantially a remixing step.

8. Process as claimed in any one of the claims from 5 to 7, wherein in at least one of said n mixing steps after said first mixing step, preferably in a last step of said n mixing steps, it is provided to feed said respective batch mixer with ingredients capable of facilitating the cross-linking, wherein the overall content of ingredients capable of facilitating the cross-linking is greater than 1 phr and/or less than or equal to 10 phr.

9. Process as claimed in any one of the claims from 6 to 8, wherein said number m is greater than or equal to three, and wherein said number n is greater than or equal to four.

10. Process as claimed in claim 9, wherein said number m is equal to three and wherein a final step of said n mixing steps is immediately followed by a respective step of unloading said respective batch of elastomeric compound from said outlet mouth (204) of the respective twin-screw conical mixer with said door (206) arranged in said open configuration.

11. Process as claimed in any one of the preceding claims, wherein said respective twin-screw conical mixer (201) is not fed with any ingredient of the elastomeric compound, except for the respective batch of elastomeric compound unloaded from the respective batch mixer (101).

12. Process as claimed in any one of the claims from 5 to 11, wherein it is provided to provide only one batch mixer (101) for all said n mixing steps and only one twin-screw conical mixer (201) for all said m mixing steps, wherein said twin-screw conical mixer (201) comprises a load hopper (207) having a bottom end at the inlet mouth (203) and an upper end at an unload mouth (110) of said respective batch mixer (101), wherein said load hopper is configured for connecting, without interruption, the mixing chamber of the respective batch mixer with the mixing chamber of the twin-screw conical mixer and wherein the twin-screw conical mixer comprises a suction pump (208) in fluid connection with said inner chamber of the twin-screw conical mixer, having a suction mouth (209) at the load hopper (207).

13. Process as claimed in any one of the preceding claims, wherein said screws (205) of the respective twin-screw conical mixer (201) are co-penetrating helical screws with variable pitch which rotate at the same speed, said speed being less than or equal to 130 rpm and/or greater than or equal to 20 rpm, wherein said screws have a maximum diameter less than or equal to 1000 mm, and/or greater than or equal to 500 mm, a minimum diameter less than or equal to 500 mm, and/or greater than or equal to 100 mm, and a length less than or equal to 2000 mm, and/or greater than or equal to 500 mm, wherein rotation axes of said screws together form an acute angle (210) less than or equal to 30°, and/or greater than or equal to 10°, wherein each of said screws is driven by a motor having power less than or equal to 300 kW, and/or greater than or equal to 80 kW, wherein said inlet mouth (203) has a section which is extended in proximity to the screws, said section having area greater than or equal to 2000 cm² and wherein said inner chamber (202) of the twin-screw conical mixer (201) has a useful volume for mixing the respective elastomeric compound greater than or equal to 100 litres, wherein the mixing in said respective batch mixer (101) is executed at a rotor speed greater than or equal to 10 revolutions per minute and/or less than or equal to 80 revolutions per minute, wherein said respective first predetermined time interval of mixing in said respective batch mixer is greater than or equal to 100 s, and/or less than or equal to 500, wherein said rotors rotate in a counter-rotating manner and wherein said respective second predetermined time interval of mixing in said twin-screw conical mixer (201) with closed door is greater than or equal to 60 seconds, and/or less than or equal to 250 s.

14. Process as claimed in any one of the preceding claims, wherein said mixing in said twin-screw conical mixer (201) occurs by alternating at least one sub-step of mixing with normal rotation of the screws with at least one sub-step of mixing with reversed rotation of the screws.

15. Process for producing tyres comprising:
- the process for producing an elastomeric compound (108) according to any one of the preceding claims;
- building a green tyre,
- subjecting the green tyre to moulding and vulcanisation in order to obtain a finished tyre;
wherein at least one component of said green tyre comprises said elastomeric compound (108), wherein said at least one component is a structural element of said finished tyre selected from the group: tread band, under-layer, carcass layer, belt layer, sidewall, reinforced element, anti-abrasive layer.

## Patentansprüche

1. Verfahren zur Herstellung einer Elastomerverbindung (108) umfassend 100 phr zumindest eines elastomeren Polymers (102) und zumindest 10 phr zumindest eines verstärkenden Füllstoffs (103), wobei das Verfahren umfasst:
- Bereitstellen eines oder mehrerer Chargenmischer (101), wobei jeder Chargenmischer eine Mischkammer, ein Paar von Rotoren, die in der Mischkammer untergebracht sind, und einen Kolben umfasst, der über den Rotoren angeordnet und zu dem Paar von Rotoren hin und davon weg beweglich ist;
- Bereitstellen eines oder mehrerer Doppelschnecken-Konusmischer (201), wobei jeder Doppelschnecken-Konusmischer eine Mischkammer (202) aufweist, die mit einer Einlassmündung (203) und einer Auslassmündung (204) versehen ist, wobei die Mischkammer zwei konische Schnecken (205) einhaust, die gegenläufig sind und zu der Auslassmündung zusammenlaufen, wobei jeder Doppelschnecken-Konusmischer mit einer Tür (206) versehen ist, die dazu geeignet ist, eine geschlossene Konfiguration der Auslassmündung und eine offene Konfiguration der Auslassmündung einzunehmen;
- zumindest einen Schritt zur Einspeisung zumindest eines Teils des zumindest einen elastomeren Polymers (102) und zumindest eines Teils des verstärkenden Füllstoffs (103) in jeweils einen oder mehrere der Chargenmischer (101);
- eine Anzahl n von Mischschritten, in einem jeweiligen der einen oder mehreren Chargenmischer (101) und für ein jeweiliges erstes vorbestimmtes Zeitintervall, auf eine Weise, um eine jeweilige Charge der Elastomerverbindung (108) zu erhalten, wobei auf jeden Mischschritt in dem jeweiligen Chargenmischer ein jeweiliger Schritt des vollständigen Entladens der jeweiligen Charge der Elastomerverbindung aus dem jeweiligen Chargenmischer und in der Folge ein jeweiliger Schritt des Einspeisens der jeweiligen Charge der entladenen Elastomerverbindung in einen jeweiligen der einen oder mehreren Doppelschnecken-Konusmischer (201) folgt, wobei ein erster Schritt der Anzahl n von Mischschritten unmittelbar auf den zumindest einen Schritt des Einspeisens in den jeweiligen Chargenmischer folgt;
- eine Anzahl m von Mischschritten der jeweiligen Charge der Elastomerverbindung (108) in einem jeweiligen der einen oder mehreren Doppelschnecken-Konusmischer (201), wobei sich die Tür (206) für ein jeweiliges zweites vorbestimmtes Zeitintervall in der geschlossenen Konfiguration der Auslassmündung befindet, jeder Mischschritt in dem jeweiligen Doppelschnecken-Konusmischer auf einen jeweiligen Schritt der Anzahl n von Schritten zur Einspeisung in den jeweiligen Doppelschnecken-Konusmischer folgt, und auf ihn ein jeweiliger Schritt des Entladens der jeweiligen Charge der Elastomerverbindung aus der Auslassmündung des jeweiligen Doppelschnecken-Konusmischers folgt, wobei die Tür in der offenen Konfiguration angeordnet ist, wobei die Anzahlen n und m Ganzzahlen größer oder gleich eins sind, und wobei n größer als oder gleich m ist.

2. Verfahren nach Anspruch 1, wobei jeder Schritt des Einspeisens der jeweiligen Charge der Elastomerverbindung in den Doppelschnecken-Konusmischer (201) unmittelbar nach der jeweiligen Entladung der jeweiligen Charge der Verbindung aus dem jeweiligen Chargenmischer (101) erfolgt,
wobei die Temperatur der Elastomerverbindung, die in den jeweiligen Doppelschnecken-Konusmischer (201) eingespeist wird, im Wesentlichen gleich der Temperatur der Elastomerverbindung ist, die aus dem Chargenmischer (101) entladen wird, und wobei jeder Mischschritt in dem jeweiligen Doppelschnecken-Konusmischer (201) unmittelbar auf den jeweiligen Schritt der Anzahl n von Schritten zur Einspeisung in den jeweiligen Doppelschnecken-Konusmischer (201) folgt.

3. Verfahren nach Anspruch 1 oder 2, wobei das zumindest eine elastomere Polymer ausgewählt ist aus: Dien-Elastomerpolymeren und Mono-Olefin-Elastomerpolymeren, oder Mischungen davon, wobei der zumindest eine verstärkenden Füllstoff ausgewählt ist aus: Kohlenstoffruß, verstärkendem Füllstoff auf Basis von Siliciumdioxid, Aluminiumoxid, Calciumcarbonat, Kaolin oder Mischungen davon, und wobei der Gesamtgehalt an verstärkendem Füllstoff in der Elastomerverbindung gleich oder größer als 20 phr und/oder kleiner als 120 phr ist, und wobei der Gesamtgehalt an Kohlenstoffruß in der Elastomerverbindung gleich oder größer als 40 phr ist.

4. Verfahren nach einem der vorhergehenden Ansprüche, wobei der Gesamtgehalt der Elastomerverbindung an elastomerem Polymer und/oder an verstärkendem Füllstoff in den jeweiligen Chargenmischer (101) eingespeist wird.

5. Verfahren nach einem der vorhergehenden Ansprüche, wobei die Anzahl n größer als oder gleich zwei ist.

6. Verfahren nach Anspruch 5, wobei die Anzahl m größer als oder gleich zwei ist, und wobei die Anzahl n größer als oder gleich drei ist.

7. Verfahren nach einem der Ansprüche 5 bis 6, wobei zumindest einer der n Mischschritte nach dem ersten Mischschritt, vorzugsweise ein dritter Schritt der n Mischschritte nach einem zweiten Schritt der n Schritte, der seinerseits nach dem ersten Mischschritt erfolgt, im Wesentlichen ein Wiederaufmischschritt ist.

8. Verfahren nach einem der Ansprüche 5 bis 7, wobei in zumindest einem der n Mischschritte nach dem ersten Mischschritt, vorzugsweise in einem letzten Schritt der n Mischschritte, vorgesehen wird, dass Bestandteile, die in der Lage sind, die Vernetzung zu ermöglichen, in den jeweiligen Chargenmischer eingespeist werden, wobei der Gesamtgehalt der Bestandteile, die in der Lage sind, die Vernetzung zu ermöglichen, größer als 1 phr und/oder kleiner als oder gleich 10 phr ist.

9. Verfahren nach einem der Ansprüche 6 bis 8, wobei die Anzahl m größer als oder gleich drei ist, und wobei die Anzahl n größer als oder gleich vier ist.

10. Verfahren nach Anspruch 9, wobei die Anzahl m gleich drei ist, und wobei auf einen letzten Schritt der n Mischschritte unmittelbar ein jeweiliger Schritt des Entladens der jeweiligen Charge der Elastomerverbindung aus der Auslassmündung (204) des jeweiligen Doppelschnecken-Konusmischers folgt, wobei die Tür (206) in der offenen Konfiguration angeordnet ist.

11. Verfahren nach einem der vorhergehenden Ansprüche, wobei in den jeweiligen Doppelschnecken-Konusmischer (201) kein Bestandteil der Elastomerverbindung eingespeist wird, mit Ausnahme der jeweiligen Charge der Elastomerverbindung, die aus dem jeweiligen Chargenmischer (101) entladen wird.

12. Verfahren nach einem der Ansprüche 5 bis 11, wobei vorgesehen wird, dass nur ein Chargenmischer (101) für alle der n Mischschritte vorgesehen wird und nur ein Doppelschnecken-Konusmischer (201) für alle der m Mischschritte, wobei der Doppelschnecken-Konusmischer (201) einen Ladetrichter (207) mit einem unteren Ende an der Einlassmündung (203) und einem oberen Ende an einer Entlademündung (110) des jeweiligen Chargenmischers (101) umfasst, wobei der Ladetrichter dazu ausgestaltet ist, ohne Unterbrechung die Mischkammer des jeweiligen Chargenmischers mit der Mischkammer des Doppelschnecken-Konusmischers zu verbinden, und wobei der Doppelschnecken-Konusmischer eine Saugpumpe (208) in Fluidverbindung mit der Innenkammer des Doppelschnecken-Konusmischers umfasst, die eine Saugmündung (209) an dem Ladetrichter (207) aufweist.

13. Verfahren nach einem der vorhergehenden Ansprüche, wobei die Schnecken (205) des jeweiligen Doppelschnecken-Konusmischers (201) einander durchdringende Schneckenschrauben mit variabler Steigung sind, die mit derselben Drehzahl rotieren, wobei die Drehzahl kleiner als oder gleich 130 U/min und/oder größer als oder gleich 20 U/min ist, wobei die Schnecken einen maximalen Durchmesser kleiner als oder gleich 1000 mm, und/oder größer als oder gleich 500 mm, einen minimalen Durchmesser kleiner als oder gleich 500 mm, und/oder größer als oder gleich 100 mm, und eine Länge kleiner als oder gleich 2000 mm, und/oder größer als oder gleich 500 mm aufweisen, wobei die Drehachsen der Schnecken zusammen einen spitzen Winkel (210) kleiner als oder gleich 30° und/oder größer als oder gleich 10° bilden, wobei jede der Schnecken von einem Motor mit einer Leistung von weniger als oder gleich 300 kW, und/oder mehr als oder gleich 80 kW angetrieben wird, wobei die Einlassmündung (203) einen Querschnitt aufweist, der in unmittelbarer Nähe der Schnecken aufgeweitet ist, wobei der Querschnitt eine Fläche von mehr als oder gleich 2000 cm² aufweist, und wobei die Innenkammer (202) des Doppelschnecken-Konusmischers (201) ein nutzbares Volumen zur Mischung der jeweiligen Elastomerverbindung von mehr als oder gleich 100 Liter aufweist, wobei das Mischen in dem jeweiligen Chargenmischer (101) mit einer Rotordrehzahl von mehr als oder gleich 10 Umdrehungen pro Minute und/oder weniger als oder gleich 80 Umdrehungen pro Minute durchgeführt wird, wobei das jeweilige erste vorbestimmte Zeitintervall der Mischung in dem jeweiligen Chargenmischer größer als oder gleich 100 s, und/oder kleiner als oder gleich 500 ist, wobei die Rotoren sich in einer gegenläufigen Weise drehen und wobei das jeweilige zweite vorbestimmte Zeitintervall der Mischung in dem Doppelschnecken-Konusmischer (201) mit geschlossener Tür größer als oder gleich 60 Sekunden und/oder kleiner als oder gleich 250 s ist.

14. Verfahren nach einem der vorhergehenden Ansprüche, wobei das Mischen in dem Doppelschnecken-Konusmischer (201) erfolgt, indem zumindest ein Teil-Mischschritt mit normaler Drehung der Schnecken und zumindest ein Teil-Mischschritt mit umgekehrter Drehung der Schnecken sich abwechseln.

15. Verfahren zur Herstellung von Reifen, wobei das Verfahren umfasst:
- das Verfahren zur Herstellung einer Elastomerverbindung (108) nach einem der vorhergehenden Ansprüche;
- Fertigen eines Rohreifens,
- Unterziehen des Rohreifens einer Formung und Vulkanisierung, um einen fertigen Reifen zu erhalten;
wobei zumindest eine Komponente des Rohreifens die Elastomerverbindung (108) umfasst, wobei die zumindest eine Komponente ein Strukturelement des fertigen Reifens ist, ausgewählt aus der Gruppe bestehend aus: Laufflächenring, Unterlage, Karkassenlage, Gürtellage, Seitenwand, verstärktes Element, abriebfeste Lage.

## Revendications

1. Procédé de production d'un composé élastomère (108) comprenant 100 phr d'au moins un polymère élastomère (102) et au moins 10 phr d'au moins une charge renforçante (103), le procédé comprenant :
- la fourniture d'un ou de plusieurs mélangeur(s) discontinu(s) (101), chaque mélangeur discontinu comprenant une chambre de mélange, une paire de rotors reçus dans la chambre de mélange et un piston agencé au-dessus des rotors et pouvant se déplacer vers la paire de rotors et à partir de celle-ci ;
- la fourniture d'un ou de plusieurs mélangeur(s) conique(s) à double vis (201), chaque mélangeur conique à double vis ayant une chambre de mélange (202) pourvue d'une embouchure d'entrée (203) et d'une embouchure de sortie (204), où la chambre de mélange reçoit deux vis coniques (205) contrarotatives et convergeant vers l'embouchure de sortie, chacun desdits mélangeurs coniques à double vis étant pourvu d'une porte (206) adaptée pour adopter une configuration fermée de ladite embouchure de sortie et une configuration ouverte de ladite embouchure de sortie ;
- au moins une étape d'alimentation d'un mélangeur respectif dudit ou desdits plusieurs mélangeur(s) discontinu(s) (101) en au moins une partie dudit au moins un polymère élastomère (102) et au moins une partie de ladite charge renforçante (103) ;
- un nombre n d'étapes de mélange, dans un mélangeur respectif dudit ou desdits plusieurs mélangeur(s) discontinu(s) (101) et pendant un premier intervalle de temps prédéterminé respectif, de manière à obtenir un lot respectif de composé élastomère (108), chaque étape de mélange dans le mélangeur discontinu respectif étant suivie d'une étape respective de déchargement complet dudit lot respectif de composé élastomère dudit mélangeur discontinu respectif et, ensuite, d'une étape respective d'alimentation d'un mélangeur respectif dudit ou desdits plusieurs mélangeur (s) conique (s) à double vis (201) en ledit lot respectif de composé élastomère déchargé, où une première étape dudit nombre n d'étapes de mélange suit immédiatement ladite au moins une étape d'alimentation dudit mélangeur discontinu respectif ;
- un nombre m d'étapes de mélange dudit lot respectif de composé élastomère (108) dans un mélangeur respectif dudit ou desdits plusieurs mélangeur(s) conique(s) à double vis (201) avec ladite porte (206) dans ladite configuration fermée de ladite embouchure de sortie pendant un deuxième intervalle de temps prédéterminé respectif, chaque étape de mélange dans le mélangeur conique à double vis respectif étant ultérieure à une étape respective dudit nombre n d'étapes d'alimentation du mélangeur conique à double vis respectif et étant suivie d'une étape respective de déchargement dudit lot respectif de composé élastomère de ladite embouchure de sortie du mélangeur conique à double vis respectif avec ladite porte agencée dans ladite configuration ouverte,
dans lequel lesdits nombres n et m sont des nombres entiers supérieurs ou égaux à un, et dans lequel n est supérieur ou égal à m.

2. Procédé tel que revendiqué dans la revendication 1, dans lequel chaque étape d'alimentation dudit mélangeur conique à double vis respectif (201) en ledit lot respectif de composé élastomère a lieu immédiatement après le déchargement respectif du lot respectif de composé du mélangeur discontinu respectif (101), où la température du composé élastomère introduit dans ledit mélangeur conique à double vis respectif (201) est essentiellement égale à la température du composé élastomère déchargé du mélangeur discontinu (101), et où chaque étape de mélange dans le mélangeur conique à double vis respectif (201) suit immédiatement ladite étape respective dudit nombre n d'étapes d'alimentation du mélangeur conique à double vis respectif (201).

3. Procédé tel que revendiqué dans la revendication 1 ou 2, dans lequel ledit au moins un polymère élastomère est choisi parmi : des polymères élastomères diéniques et des polymères élastomères mono-oléfiniques, ou des mélanges de ceux-ci, où ladite au moins une charge renforçante est choisie parmi : le noir de carbone, une charge renforçante à base de silice, l'alumine, le carbonate de calcium, le kaolin et des mélanges de ceux-ci et où la teneur globale en charge renforçante dans ledit composé élastomère est supérieure ou égale à 20 phr et/ou inférieure à 120 phr, et où la teneur globale en noir de carbone dans ledit composé élastomère est supérieure ou égale à 40 phr.

4. Procédé tel que revendiqué dans l'une quelconque des revendications précédentes, dans lequel la teneur entière de polymère élastomère et/ou de charge renforçante du composé élastomère est introduite dans ledit mélangeur discontinu respectif (101).

5. Procédé tel que revendiqué dans l'une quelconque des revendications précédentes, dans lequel ledit nombre n est supérieur ou égal à deux.

6. Procédé tel que revendiqué dans la revendication 5, dans lequel ledit nombre m est supérieur ou égal à deux et dans lequel ledit nombre n est supérieur ou égal à trois.

7. Procédé tel que revendiqué dans l'une quelconque des revendications 5 et 6, dans lequel au moins l'une desdites n étapes de mélange après ladite première étape de mélange, de préférence une troisième étape desdites n étapes de mélange après une deuxième étape desdites n étapes, à son tour après ladite première étape de mélange, est essentiellement une étape de re-mélange.

8. Procédé tel que revendiqué dans l'une quelconque des revendications 5 à 7, dans lequel dans au moins l'une desdits n étapes de mélange après ladite première étape de mélange, de préférence dans une dernière étape desdites n étapes de mélange, on prévoit l'alimentation dudit mélangeur discontinu respectif en ingrédients capables de faciliter la réticulation, où la teneur globale en ingrédients capables de faciliter la réticulation est supérieure à 1 phr et/ou inférieure ou égale à 10 phr.

9. Procédé tel que revendiqué dans l'une quelconque des revendications 6 à 8, dans lequel ledit nombre m est supérieur ou égal à trois, et dans lequel ledit nombre n est supérieur ou égal à quatre.

10. Procédé tel que revendiqué dans la revendication 9, dans lequel ledit nombre m est égal à trois et dans lequel une étape finale desdites n étapes de mélange est immédiatement suivie d'une étape respective de déchargement dudit lot respectif de composé élastomère de ladite embouchure de sortie (204) du mélangeur conique à double vis respectif avec ladite porte (206) agencée dans ladite configuration ouverte.

11. Procédé tel que revendiqué dans l'une quelconque des revendications précédentes, dans lequel ledit mélangeur conique à double vis respectif (201) n'est alimenté en aucun ingrédient du composé élastomère, à l'exception du lot respectif de composé élastomère déchargé du mélangeur discontinu respectif (101).

12. Procédé tel que revendiqué dans l'une quelconque des revendications 5 à 11, dans lequel on prévoit la fourniture d'un seul mélangeur discontinu (101) pour toutes lesdites n étapes de mélange et d'un seul mélangeur conique à double vis (201) pour toutes lesdites m étapes de mélange, où ledit mélangeur conique à double vis (201) comprend une trémie de chargement (207) ayant une extrémité inférieure au niveau de l'embouchure d'entrée (203) et une extrémité supérieure au niveau d'une embouchure de déchargement (110) dudit mélangeur discontinu respectif (101), où ladite trémie de chargement est configurée pour relier, sans interruption, la chambre de mélange du mélangeur discontinu respectif à la chambre de mélange du mélangeur conique à double vis et où le mélangeur conique à double vis comprend une pompe d'aspiration (208) en communication fluidique avec ladite chambre interne du mélangeur conique à double vis, ayant une embouchure d'aspiration (209) au niveau de la trémie de chargement (207) .

13. Procédé tel que revendiqué dans l'une quelconque des revendications précédentes, dans lequel lesdites vis (205) du mélangeur conique à double vis respectif (201) sont des vis hélicoïdales co-pénétrantes à pas variable qui tournent à la même vitesse, ladite vitesse étant inférieure ou égale à 130 tours/minute et/ou supérieure ou égale à 20 tours/minute, où lesdites vis ont un diamètre maximal inférieur ou égal à 1000 mm et/ou supérieur ou égal à 500 mm, un diamètre minimal inférieur ou égal à 500 mm et/ou supérieur ou égal à 100 mm, et une longueur inférieure ou égale à 2000 mm et/ou supérieure ou égale à 500 mm, où les axes de rotation desdites vis forment ensemble un angle aigu (210) inférieur ou égal à 30° et/ou supérieur ou égal à 10°, où chacune desdites vis est entraînée par un moteur ayant une puissance inférieure ou égale à 300 kW et/ou supérieure ou égale à 80 kW, où ladite embouchure d'entrée (203) a une section qui est étendue à proximité des vis, ladite section ayant une surface supérieure ou égale à 2000 cm² et où ladite chambre interne (202) du mélangeur conique à vis double (201) a un volume utile pour mélanger le composé élastomère respectif supérieur ou égal à 100 litres, où le mélange dans ledit mélangeur discontinu respectif (101) est exécuté à une vitesse de rotor supérieure ou égale à 10 tours par minute et/ou inférieure ou égale à 80 tours par minute, où ledit premier intervalle de temps prédéterminé respectif de mélange dans ledit mélangeur discontinu respectif est supérieur ou égal à 100 s et/ou inférieur ou égal à 500, où lesdits rotors tournent de manière contrarotative, et où ledit deuxième intervalle de temps prédéterminé respectif de mélange dans ledit mélangeur conique à double vis (201) avec la porte fermée est supérieur ou égal à 60 secondes et/ou inférieur ou égal à 250 s.

14. Procédé tel que revendiqué dans l'une quelconque des revendications précédentes, dans lequel ledit mélange dans ledit mélangeur conique à double vis (201) a lieu en alternant au moins une sous-étape de mélange avec une rotation normale des vis avec au moins une sous-étape de mélange avec une rotation en sens inverse des vis.

15. Procédé de production de pneus comprenant :
- le procédé de production d'un composé élastomère (108) selon l'une quelconque des revendications précédentes ;
- la construction d'un pneu cru,
- la soumission du pneu cru à un moulage et à une vulcanisation afin d'obtenir un pneu fini ;
où au moins un composant dudit pneu cru comprend ledit composé élastomère (108), où ledit au moins un composant est un élément de structure dudit pneu fini choisi dans le groupe constitué par : une bande de roulement, une sous-couche, une couche de carcasse, une couche de ceinture, un flanc, un élément renforcé, et une couche anti-abrasive.
